# DEMANDE DE BREVET EUROPEEN

(11) **EP 4 354 177 A1**
(43) Date de publication de la demande: **17.04.2024**
(21) Numéro de dépôt: 23201147.8
(22) Date de dépôt: 02.10.2023
(51) Int. Cl.: G01S 7/487, G01S 17/04

(54) **PROCÉDÉ DE DÉTECTION D'UN OBJET PAR UN CAPTEUR TEMPS DE VOL**

(30) Priorité: 14.10.2022 FR 2210586
(71) Demandeur: STMicroelectronics (ALPS) SAS, 38000 Grenoble (FR); STMICROELECTRONICS (GRENOBLE 2) SAS, 38000 Grenoble (FR); STMicroelectronics Design and Application s.r.o., 186 00 Praha 8 (CZ)
(72) Inventeur: VASSAL, Robin, 38100 GRENOBLE (FR); ANDRLE, Jiri, 14100 PRAHA 3 (CZ); CABAJ, Peter, 12000 PRAGUE (CZ); TROUILLEAU, Cyrille, 38250 LANS EN VERCORS (FR)
(74) Mandataire: Casalonga

(57) **Abrégé**

Selon un aspect, il est proposé un procédé de détection d'au moins un objet (OBJ) dans une zone de détection (DET), comprenant :
- une émission d'un rayonnement optique par des moyens d'émission (ME) d'un capteur temps de vol (CTV),
- une réception par des moyens de réception (MR) du capteur temps de vol (CTV) d'une quantité de photons de rayonnement optique réfléchi par ledit au moins un objet (OBJ),
- une mesure par des moyens de mesure (MM) du capteur temps de vol (CTV) d'une quantité de photons (SIGN) et d'une distance (DIST) entre ledit capteur temps de vol (CTV) et ledit au moins un objet (OBJ), et
- une analyse de la quantité de photons détectés (SIGN) et de la distance (DIST) associée de façon à déterminer la présence d'au moins un objet (OBJ) dans une zone de détection (DET) du capteur temps de vol (CTV).

## Description

Des modes de réalisation et de mise en oeuvre concernent les dispositifs de détection d'objet, en particulier la détection d'un objet dans une zone de détection par un capteur temps de vol.

Un capteur temps de vol (connu sous le nom de « Time of flight sensor » en anglais) est un capteur utilisant la propagation de la lumière pour mesurer une distance entre un objet et le capteur. En particulier, le capteur temps de vol est configuré pour émettre un rayonnement optique, par exemple du type infrarouge ou laser, vers un objet et pour mesurer un temps de vol, c'est-à-dire qui s'écoule entre l'émission de ce rayonnement et sa réception par le capteur après la réflexion du rayonnement sur l'objet. La mesure du temps de vol permet de déterminer la distance entre l'objet et le capteur, en connaissant la vitesse du rayonnement.

D'autres dispositifs connus permettent de détecter un objet à partir de rayonnement optique comme par exemple les dispositifs employant une barrière optique (connu sous le terme anglosaxon « optical barrier »). La barrière optique dispose typiquement d'un groupe de LED (acronyme anglais de « Light-Emitting Diode » pour « Diode émettrice de lumière » en français) et d'une matrice de photodiodes recevant chacune en continue le rayonnement optique émis par une LED. La matrice de photodiodes permet de renvoyer une donnée booléenne selon qu'un objet a été détecté, c'est-à-dire lorsqu'une photodiode ne reçoit plus de rayonnement, ou non, dans le cas contraire.

Toutefois, ces dispositifs sont souvent plus onéreux et complexes puisque la barrière optique est une application pouvant nécessiter l'utilisation d'un circuit intégré dédié à l'application qu'on désigne usuellement par l'acronyme « ASIC » pour « Application-Specific Integrated Circuit », et une grande puissance de calcul liée à la quantité de données à traiter d'un nombre élevé de photodiodes pouvant entraîner une surconsommation énergétique. En outre, le taux de détection de ces dispositifs est bien souvent limité, et ne dépasse rarement 90%.

Par ailleurs, il est connu que les algorithmes mis en oeuvre dans le capteur temps de vol sont susceptibles de générer des résultats erronés appelés couramment « faux positif » lorsque ceux-ci indiquent la présence d'un objet par erreur. D'autres résultats erronés peuvent provenir d'une absence de détection d'objets qui sont confondus avec l'environnement du capteur, comme par exemple avec des parois, situées dans la zone de détection du capteur. Ces algorithmes ne permettent pas d'obtenir un taux de détection suffisant pour éviter ces résultats erronés et pour permettre de détecter des objets dans n'importe quel environnement, en particulier des objets à proximité de parois.

En outre, la détection du capteur est limitée lorsque ces algorithmes sont utilisés puisqu'ils ne permettent pas à celui-ci de détecter des objets de taille réduite tels que des pièces ou des particules de poussière. Les particules de poussière, une fois accumulée dans la zone de détection, peuvent être autant problématiques que d'autres objets de plus grande taille dans certaines applications telles que l'affichage de données sur un écran dont certaines parties peuvent être masquées par ces objets.

Ainsi, il existe un besoin de proposer des solutions de détection d'objets permettant d'améliorer la détection d'objets.

Selon un aspect, il est proposé un procédé de détection d'au moins un objet dans une zone de détection d'un capteur temps de vol, comprenant :
- une émission d'un rayonnement optique par des moyens d'émission du capteur temps de vol,
- une réception par des moyens de réception du capteur temps de vol d'une quantité de photons de rayonnement optique réfléchi par ledit au moins un objet,
- une mesure par des moyens de mesure du capteur temps de vol d'une quantité de photons et d'une distance entre le capteur temps de vol et ledit au moins un objet,
- une analyse de la quantité de photons détectés et de la distance associée de façon à déterminer la présence d'au moins un objet dans la zone de détection du capteur temps de vol.

Il est donc proposé un capteur temps de vol utilisant un algorithme de détection d'objets basé sur une analyse de deux types de données de mesure distinctes : une quantité de photons détectée par le capteur lors de la réception du rayonnement optique réfléchi et une distance calculée à partir du temps écoulé entre l'émission et la réception du rayonnement optique. L'analyse met en relation les deux types de données de sorte que les valeurs de ces données coïncident lors de l'apparition d'un objet dans la zone de détection.

La mesure de la quantité de photons du rayonnement réfléchi et l'association de cette quantité à la distance mesurée permettent d'améliorer la précision de la détection de l'objet dans la zone de détection. En effet, la quantité de photon du rayonnement réfléchi donne également une information sur la position de l'objet, à savoir si celui-ci est plus ou moins proche du capteur, et varie également en fonction de la nature de l'objet, notamment en raison du matériau de l'objet qui peut influer sur ses propriétés de réflexion optique. Lorsque le rayonnement est réfléchi par un objet proche du capteur par exemple, la quantité de photons provenant du rayonnement réfléchi par l'objet est relativement élevée puisque les photons sont quasiment tous détectés par le capteur. Autrement dit, le rapport entre le nombre de photons reçus et le nombre de photons émis est proche de 1 sur des courtes distances entre le capteur et l'objet et diminue sur des plus longues distances.

Lorsqu'un objet est situé proche d'une paroi, l'analyse de la quantité de photons détectés et la distance mesurée permet de différentier l'objet de la paroi.

Par ailleurs, l'utilisation d'un capteur temps de vol présente des avantages en termes d'intégration qui est moins complexe qu'avec d'autres capteurs photoniques, de compensation en température, de consommation d'énergie et de taux de détection puisque le capteur temps de vol peut permettre de détecter des objets de taille réduite. Le capteur temps de vol peut par exemple détecter des objets de faibles dimensions, tels qu'une pièce de monnaie lorsque la tranche de la pièce est située en regard du capteur, la pièce pouvant présenter une largeur d'environ 11 mm et une épaisseur d'environ 1,5 mm. Le capteur temps de vol peut également détecter des objets plus petits qu'une pièce de monnaie, tels que des particules de poussières.

La méthode de détection met donc à profit un capteur reconnu pour son champ de vision étendu et sa capacité à mesurer plusieurs paramètres d'un rayonnement optique pour améliorer la fiabilité de la détection.

Selon un mode de mise en oeuvre, l'analyse de la quantité de photons associée à la distance mesurée comprend un stockage successif de N valeurs de quantités de photons et de distances associées, un calcul d'un indicateur de tendance centrale de quantité de photons à partir des N quantités de photons, et un calcul d'un indicateur de tendance centrale de distance de sorte que ledit au moins un objet est détecté selon lesdits indicateurs de tendance centrale calculées.

L'indicateur de tendance centrale, tel que la moyenne ou la médiane, correspond à une valeur statistique permettant de faire une estimation relativement précise de la position de l'objet à détecter selon une suite de valeur de quantités de photons et de distances mesurées. Les indicateurs de tendance centrale peuvent être calculées sur un nombre N de quantités de photons et de distances mesurées successivement sur une fenêtre temporelle, c'est-à-dire un intervalle de temps donné, qui peut être glissante. L'intervalle de temps peut être plus ou moins long suivant le nombre N de valeurs de quantité de photons et de distance mesurées qu'on souhaite stocker et prendre en compte dans le calcul des indicateurs de tendance centrale. Un nombre N élevé permet de limiter des valeurs aberrantes de certaines données de mesure générées dans le même intervalle de temps et donc de ne pas produire un résultat erroné sur la détection d'objets dans la zone de détection.

Selon un mode de mise en oeuvre, ledit au moins un objet est détecté lorsque l'indicateur de tendance centrale de distance est compris dans l'intervalle de distance et lorsque l'indicateur de tendance centrale de quantités de photons est compris dans un intervalle de quantités de photons

L'intervalle de distances comprend des valeurs de distance lorsqu'aucun objet n'est présent dans la zone de détection. Ces valeurs correspondent généralement à des objets ne présentant aucun intérêt à être détectés. L'intervalle de distances permet donc d'exclure ces objets de la détection par le capteur temps de vol.

Le capteur peut être paramétré afin de définir des intervalles de distances et de quantités de photons pour lesquelles on suppose qu'un objet est détecté ou non dans la zone de détection.

Selon un mode de mise en oeuvre, ledit au moins un objet étant détecté lorsque l'indicateur de tendance centrale de distance est inférieur à une première distance.

Un objet relativement proche du capteur temps de vol peut être détecté de façon fiable à partir de la distance mesurée, quelque soit la quantité de photon à laquelle cette distance est associée.

Selon un mode de mise en oeuvre, l'indicateur de tendance centrale de quantités de photons est une médiane des N quantités de photons et l'indicateur de tendance centrale de distance est une médiane des N distances associées.

Le calcul de la valeur médiane des quantités de photons et des distances peut être avantageux en termes de fiabilité, puisqu'il permet de réduire l'influence de valeur aberrante sur le résultat de la détection.

Selon un mode de mise en oeuvre, l'indicateur de tendance centrale de quantités de photons est une moyenne des N quantités de photons et l'indicateur de tendance centrale de distance est une moyenne des N distances associées.

Le calcul de la moyenne est une alternative au calcul de la médiane des quantités de photons et des distances associées.

Selon un autre aspect, il est proposé un procédé de détection d'au moins un objet dans une cavité comportant une ouverture par laquelle ledit au moins un objet peut s'engouffrer et un fond, un capteur temps de vol étant monté sur une paroi de la cavité, le capteur temps de vol présentant une zone de détection s'étendant entre le capteur temps de vol et une paroi de la cavité opposée au capteur temps de vol jusqu'au fond de la cavité.

Le procédé comprend une mise en oeuvre du procédé mentionné précédemment par le capteur temps de vol de manière à détecter la présence dudit au moins un objet lorsqu'il repose sur le fond de la cavité.

Le procédé peut donc être mis en oeuvre dans le cadre d'une détection d'objet dans un espace partiellement fermé dont les parois peuvent être détectés par le capteur temps de vol. Dans cette application, le procédé est particulièrement avantageux puisqu'il permet de différentier la détection d'un objet qui repose au fond de la cavité d'une détection d'une paroi de la cavité par le capteur temps de vol.

Selon un mode de mise en oeuvre, le procédé de détection comprend une émission de faisceaux lumineux par un écran situé au fond de la cavité et une orientation des faisceaux lumineux vers l'extérieur de la cavité par un miroir incliné placé au niveau de l'ouverture.

Ainsi, une cavité présentant une telle structure permet de transmettre des informations affichées sur l'écran de façon lisible à l'extérieur de la cavité tout en protégeant l'écran situé à l'intérieur de la cavité.

Selon un mode de mise en oeuvre, le procédé comprend une calibration du capteur temps de vol de façon à déterminer l'intervalle de distance et l'intervalle de quantité de photons à partir de la détection de la paroi de la cavité opposée au capteur temps de vol.

La calibration permet, après installation du capteur dans une cavité par exemple, l'enregistrement par le capteur de la position d'une paroi afin de ne pas confondre un objet avec cette paroi lors de la phase de détection et facilite ainsi son intégration dans un système de détection comportant une cavité de dimensions variables.

Selon un autre aspect, il est proposé un capteur temps de vol, comprenant :
- des moyens d'émission configurés pour émettre un rayonnement optique,
- des moyens de réception configurés pour détecter une quantité de photons de rayonnement optique réfléchi par ledit au moins un objet,
- des moyens de mesure configurés pour mesurer une quantité de photons et une distance entre ledit capteur temps de vol et ledit au moins un objet, et
- des moyens de traitement configurés pour analyser la quantité de photons et la distance associée de façon à déterminer la présence d'au moins un objet dans une zone de détection.

Selon un mode de réalisation, les moyens de traitement comprennent des moyens de stockage configurés pour stocker successivement N valeurs de quantités de photons et de distances associées et des moyens de calcul configurés pour calculer un indicateur de tendance centrale de quantité de photons à partir des N quantités de photons et un indicateur de tendance centrale de distance à partir des N distances de sorte que ledit au moins un objet est détecté selon lesdits indicateurs de tendance centrale calculés.

Selon un mode de réalisation, ledit au moins un objet est détecté lorsque l'indicateur de tendance centrale de distances est compris dans l'intervalle de distance et lorsque l'indicateur de tendance centrale de quantités de photons est compris dans un intervalle de quantité de photons.

Selon un mode de réalisation, ledit au moins un objet est détecté lorsque l'indicateur de tendance centrale de distance est inférieur à une première distance.

Selon un mode de réalisation, l'indicateur de tendance centrale de quantités de photons est une médiane des N quantités de photons et l'indicateur de tendance centrale de distance est une médiane des N distances associées.

Selon un mode de réalisation, l'indicateur de tendance centrale de quantités de photons est une moyenne des N quantités de photons et l'indicateur de tendance centrale de distance est une moyenne des N distances associées.

Selon un autre aspect, il est proposé un système de détection comprenant :
- une cavité comportant une ouverture par laquelle ledit au moins un objet peut s'engouffrer dans la cavité et un fond,
- un capteur temps de vol mentionné précédemment, monté sur une paroi de la cavité, la zone de détection du capteur temps de vol s'étendant entre le capteur temps de vol et une paroi de la cavité opposée au capteur temps de vol jusqu'au fond de la cavité de manière à pouvoir détecter la présence dudit au moins un objet lorsqu'il repose sur le fond de la cavité.

Selon un mode de réalisation, la cavité comprend et un écran situé au fond de la cavité et un miroir incliné placé au niveau de l'ouverture et configuré pour orienter des faisceaux lumineux émis par l'écran vers l'extérieur de la cavité.

Selon un mode de réalisation, le capteur temps de vol comprend des moyens de calibration configurés pour déterminer l'intervalle de distance et l'intervalle de quantité de photons à partir de la détection de la paroi de la cavité opposée au capteur temps de vol.

D'autres avantages et caractéristiques de l'invention apparaîtront à l'examen de la description détaillée de modes de réalisation et de mise en oeuvre, nullement limitatifs, et des dessins annexés sur lesquels :
[Fig 1] ;
[Fig 2] ;
[Fig 3] ;
[Fig 4] ; et
[Fig 5] illustrent schématiquement des modes de mise en oeuvre et de réalisation de l'invention.

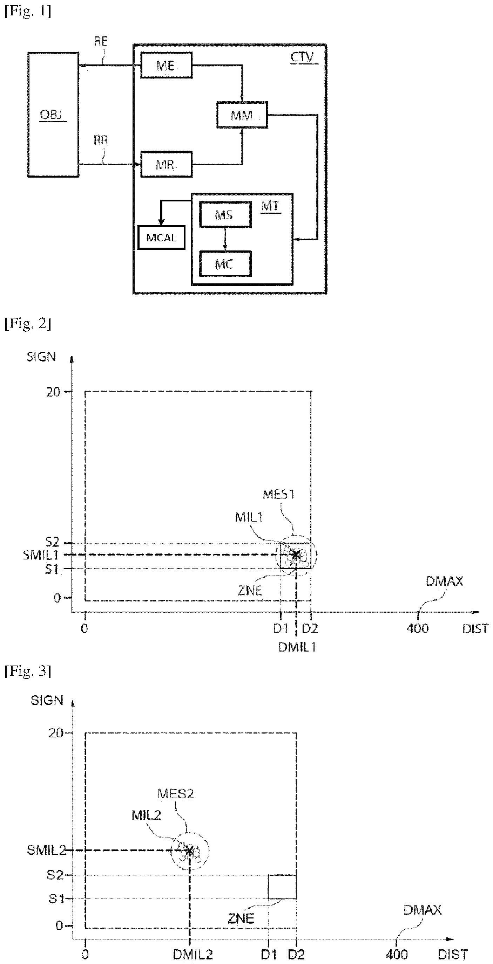

La figure 1 illustre schématiquement un capteur temps de vol CTV selon un mode de réalisation de l'invention. Le capteur temps de vol CTV comprend des moyens d'émission ME configurés pour émettre un rayonnement optique RE, tel qu'une onde lumineuse infrarouge ou un laser. Les moyens d'émission ME peuvent comprendre une diode laser pouvant générer le rayonnement optique RE en continu ou périodiquement.

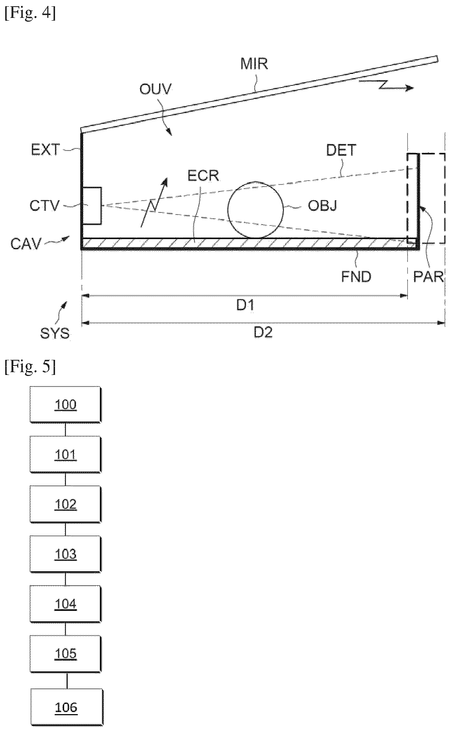

Le rayonnement optique RE émis parcourt une distance, par exemple une distance D1 comme décrit par la suite en relation avec la figure 4, jusqu'à rencontrer un objet OBJ situé dans une zone de détection DET du capteur temps de vol CTV. Le rayonnement optique RE est alors réfléchi par l'objet OBJ. Le capteur temps de vol CTV comprend des moyens de réception MR configurés pour recevoir le rayonnement optique réfléchi RR en continue ou périodiquement selon le mode d'émission du rayonnement réfléchi RR. Les moyens de réception MR comprennent une matrice de détecteurs de photons uniques du type diode à effet d'avalanche déclenchée à photon unique (connu sous l'acronyme « SPAD » pour « Single Photon Avalanche Diode » en anglais) connus en soi par l'homme du métier.

Le capteur temps de vol CTV comprend en outre des moyens de mesure MM configurés pour mesurer une quantité de photons SIGN détectée par les moyens de réception MR et une distance DIST entre le capteur CTV et l'objet OBJ. Les moyens de mesure MM peuvent être un circuit électronique de conditionnement du signal électrique transmis par les moyens de réception MR. Les mesures réalisées par les moyens de mesure MM permettent de générer des données de mesure MES qui associent la quantité de photons SIGN à la distance DIST mesurées. Pour chaque détection de rayonnement réfléchi par un objet OBJ, on mesure la quantité de photons SIGN et on détermine une distance DIST de cet objet par rapport au capteur CTV. La quantité de photons SIGN peut varier en fonction des caractéristiques de l'objet OBJ à détecter, comme la taille ou la forme de l'objet OBJ.

Le capteur temps de vol CTV comprend également des moyens de traitement MT configurés pour analyser la quantité de photons SIGN associée à la distance DIST mesurée de façon à déterminer la présence d'au moins un objet OBJ dans une zone de détection DET. Les moyens de traitement MT peuvent être un processeur par exemple. On appelle zone de détection DET, la zone physique couverte par le champ de vision du capteur temps de vol CTV qui s'étend généralement jusqu'à une distance maximale de détection DMAX. La distance maximale de détection peut dépendre de divers facteurs liés à l'environnement du capteur CTV tel que la lumière ambiante et liés également à la taille de l'objet à détecter. Le capteur CTV peut notamment être configuré pour pouvoir détecter une pièce de monnaie à une distance pouvant aller jusqu'à 300mm par exemple.

L'analyse conjointe de la quantité de photons SIGN du rayonnement réfléchi RR et de la distance DIST permet d'améliorer la précision de la détection de l'objet OBJ dans la zone de détection DET. En effet, la quantité de photon SIGN du rayonnement réfléchi RR, comme la distance DIST, donne une information sur la position de l'objet OBJ, à savoir si celui-ci est plus ou moins proche du capteur CTV.

Les moyens de traitement MT peuvent également recevoir plusieurs valeurs de quantité de photons SIGN et de distance DIST générées par les moyens de mesures MM lorsque plusieurs rayonnements optiques sont émis par les moyens d'émission ME et reçus par les moyens de réception MR. En conséquence, l'analyse peut être réalisée sur la base de plusieurs quantités de photons SIGN et distances DIST mesurées périodiquement par les moyens de mesure MM et permettre de déterminer la présence d'un objet OBJ durant toute la durée d'émission des rayonnements optiques.

Par ailleurs, les moyens de traitement MT comprennent des moyens de stockage MS et des moyens de calcul MC.

Les moyens de stockage MS sont configurés pour stocker successivement N valeurs de quantités de photons et de distances associées, où N=15 par exemple. Les moyens de stockage MS peuvent être une mémoire intégrée dans le capteur temps de vol CTV telle qu'une mémoire volatile. Les valeurs de quantités de photons SIGN et de distance DIST peuvent être générées successivement par les moyens de mesure MM sur une fenêtre temporelle, c'est-à-dire sur un intervalle de temps donné, et stockées périodiquement dans les moyens de stockage MS. Le nombre N peut être prédéfinit dans l'algorithme du capteur temps de vol CTV.

Les moyens de calcul MC sont configurés pour calculer un indicateur de tendance centrale de quantité de photons et un indicateur de tendance centrale de distance à partir des valeurs de quantités de photons SIGN et de distances DIST mesurées au préalable.

Plus particulièrement, l'indicateur de tendance centrale de quantité de photons peut être une moyenne des N quantités de photons SIGN stockées dans les moyens de stockage MS et l'indicateur de tendance centrale de distance peut être une moyenne des N distances associées aux quantités de photon SIGN et également stockés dans les moyens de stockage MS.

En alternative, l'indicateur de tendance centrale de quantité de photons est une médiane des N quantités de photons SIGN et l'indicateur de tendance centrale de distance est une médiane des N distances associées aux quantités de photon SIGN.

Ces deux indicateurs de tendance centrale sont calculés puis actualisées dès que les N mesures de quantités de photons SIGN et de distances DIST associées sont disponibles dans la mémoire du capteur temps de vol CTV.

Les indicateurs de tendance centrale peuvent être calculées à partir d'un nombre N de quantités de photons et de distances mesurées successivement sur une fenêtre temporelle, c'est-à-dire un intervalle de temps donné, qui peut être glissante. L'intervalle de temps pendant lequel la mesure est réalisée peut-être plus ou moins long suivant le nombre N de quantités de photons et de distances mesurées qu'on souhaite stocker et prendre en compte dans le calcul des indicateurs de tendance centrale. Un nombre N de données de mesure élevé permet de limiter des valeurs aberrantes de certaines quantités de photons et de distances mesurées dans le même intervalle de temps et donc de ne pas produire un résultat erroné.

La figure 2 illustre graphiquement le résultat de l'analyse par les moyens de traitement MT dans le cas où aucun objet OBJ n'est détecté dans la zone de détection DET.

Dans l'analyse illustrée sur la figure 2, plusieurs mesures MES1 ont été réalisées par les moyens de mesures MM en l'absence d'objets OBJ dans la zone de détection DET et projetées sur un axe des ordonnées correspondant aux quantités de photons et sur un axe des abscisses correspondant aux distances. En outre, les quantités de photons SIGN proviennent de rayonnements réfléchis par une paroi d'une cavité située dans la zone de détection DET à une distance comprise dans un intervalle de distance, par exemple entre une première distance D1 et une deuxième distance D2 supérieure à la première distance D1.

Le capteur peut admettre quelques écarts de distance. En particulier, les distances DIST mesurées par le capteur temps de vol CTV peuvent être légèrement en-dessous ou légèrement au-dessus de la distance réelle entre le capteur temps de vol CTV et la paroi selon les conditions dans lesquelles le rayonnement est émis ou reçu par exemple.

Les quantités de photons mesurées sont par exemple comprises dans un intervalle de quantité de photons, par exemple entre une première quantité de photon S1 et une deuxième quantité de photons S2 supérieure à la première quantité de photons S1. L'intervalle de quantité de photons et l'intervalle de distance sont illustrés sur la figure 2 par une zone ZNE. Le résultat de la détection peut donc être erroné si le capteur temps de vol CTV confond la paroi PAR avec un objet OBJ à détecter.

Les moyens de traitement MT peuvent être calibrés de façon à définir un intervalle de distances et un intervalle de quantité de photons qui sont associés à une détection de la paroi PAR située en regard du capteur temps de vol CTV.

La première distance D1, la deuxième distance D2, la première valeur S1 et la deuxième valeur S2 dépendent de la position de la paroi PAR et, plus généralement, de la structure dans laquelle est placé le capteur temps de vol CTV telle que la cavité CAV qui est décrite par la suite en relation avec la figure 4.

L'indicateur de tendance centrale de quantités de photons SMIL1 et l'indicateur de tendance centrale de distances DMIL1 sont calculées à partir des différentes mesures MES 1 de quantité de photons et de distance. Le résultat de l'analyse peut être représenté graphiquement par une valeur MIL1 correspondant à la valeur de l'indicateur de tendance centrale de la distance DMIL1 associée à la valeur de l'indicateur de tendance centrale de quantité de photons SMIL1.

L'indicateur de tendance centrale de distance DMIL1 est compris dans l'intervalle de distances, c'est-à-dire entre la première distance D1 et la deuxième distance D2, et l'indicateur de tendance centrale de quantité de photons SMIL1 est compris dans l'intervalle de quantité de photons, entre la première valeur S1 et la deuxième valeur S2 et permet de de conclure à une absence d'objet OBJ dans la zone de détection DET.

La figure 3 illustre graphiquement le résultat de l'analyse par les moyens de traitement MT dans le cas où un objet OBJ est détecté dans la zone de détection DET.

Dans l'analyse illustrée sur la figure 3, plusieurs mesures MES2 ont été réalisées par les moyens de mesures MM lors de la présence d'au moins un objet OBJ dans la zone de détection DET et représentées sur le graphique décrit précédemment en relation avec la figure 2.

En outre, les quantités de photons SIGN proviennent de rayonnements réfléchis par un objet OBJ situé dans la zone de détection DET à une distance inférieure à la première distance D1.

Les quantités de photons SIGN mesurées peuvent par exemple être supérieures à la deuxième quantité de photons S2 et les distances associées aux quantités de photons peuvent être inférieures à la première distance D1. L'indicateur de tendance centrale des quantités de photons SMIL2 et l'indicateur de tendance centrale de distance DMIL2 sont calculées à partir des différentes mesures MES2 de quantités de photons et de distances. Le résultat de l'analyse peut être représenté graphiquement par une valeur MIL2 correspondant à la valeur de l'indicateur de tendance centrale de distance DMIL2 associée à la valeur de l'indicateur de tendance centrale de quantité de photons SMIL2.

L'objet OBJ est détecté dans la zone de détection DET lorsque l'indicateur de tendance centrale de distance DMIL2 est inférieure à la première distance D1, quel que soit la valeur de l'indicateur de tendance centrale de quantité de photons SMIL2. En revanche, pour un objet OBJ situé à proximité de la paroi PAR, par exemple à une distance DIST comprise dans l'intervalle de distance, la mesure de la quantité de photons SIGN peut être avantageuse pour distinguer l'objet OBJ de la paroi PAR. Lorsque la valeur de l'indicateur de tendance centrale de quantité de photons SMIL2 calculée à partir des données de mesure MES2 est compris dans un autre intervalle de quantité de photons, c'est-à-dire est inférieur à la première valeur S1 ou est supérieur à la deuxième valeur S2, les indicateurs de tendance centrale permettent de conclure qu'au moins un objet OBJ est présent dans la zone de détection DET.

La figure 4 illustre une vue en coupe d'un système de détection SYS. Le système SYS comprend le capteur temps de vol CTV décrit précédemment en relation avec les figures 1 à 3 et une cavité CAV. La cavité CAV comporte une ouverture OUV et un fond FND. A titre non-limitatif, la cavité CAV peut être un espace délimité par des parois latérales PAR.

Le capteur temps de vol CTV est monté sur une paroi EXT de la cavité, par exemple une paroi latérale PAR de sorte que la zone de détection DET du capteur CTV couvre l'espace intérieur de la cavité CAV, notamment le fond FND. La cavité CAV présente également une autre paroi PAR qui peut être situé en regard du capteur temps de vol CTV et qui est située dans la zone de détection DET. La paroi PAR est capable de réfléchir le rayonnement optique RE et est donc détectée par le capteur temps de vol CTV.

L'ouverture OUV est située en regard du fond FND de la cavité CAV. L'ouverture OUV peut par exemple être une fente formée dans une paroi PAR opposée au fond de la cavité. L'ouverture OUV peut être traversée par un objet OBJ ayant des dimensions inférieures aux dimensions de l'ouverture OUV. Un tel objet peut ainsi s'engouffrer dans la cavité CAV par l'ouverture OUV et tomber sur le fond FND de la cavité. La détection d'objet OBJ, tel qu'une pièce, une carte ou une particule de poussière, peut être nécessaire dans certaines applications lorsque par exemple la cavité CAV comprend un écran ECR situé au fond FND de la cavité CAV et un miroir incliné MIR. L'écran ECR est configuré pour émettre des faisceaux lumineux sur le miroir incliné MIR qui est placé au niveau de l'ouverture OUV. Le miroir MIR est par exemple fixé à une paroi EXT de la cavité CAV et est configuré pour orienter les faisceaux lumineux émis par l'écran ECR vers l'extérieur de la cavité CAV.

Ainsi, une cavité CAV présentant une telle structure permet de transmettre des informations affichées sur l'écran ECR de façon lisible à l'extérieur de la cavité CAV tout en protégeant l'écran ECR situé à l'intérieur de la cavité CAV.

Par ailleurs, le capteur temps de vol CTV placé à l'intérieur de la cavité CAV permet, dans cette structure, de détecter les objets OBJ se trouvant dans la zone de détection DET et, plus particulièrement entre l'écran ECR et le miroir incliné MIR, qui gênent le passage des faisceaux lumineux émis par l'écran ECR et donc la transmission d'informations vers l'extérieur de la cavité CAV par le miroir MIR. Les faisceaux lumineux peuvent être orientés par le miroir MIR vers une vitre (non représentée) de façon à projeter les informations sur la vitre. La vitre peut notamment servir de tableau de bord d'un véhicule. En variante, l'écran ECR peut également émettre des faisceaux lumineux dirigés directement vers le tableau de bord de façon à projeter les informations sur le tableau de bord sans utiliser de miroir MIR.

Le capteur temps de vol CTV détecte l'objet OBJ lorsque ce dernier rentre dans la zone de détection DET, notamment lorsque l'objet OBJ repose sur le fond FND de la cavité CAV. Le système SYS peut comprendre d'autres dispositifs (non-représentés sur la figure) pouvant recevoir les données de mesure MES du capteur temps de vol CTV ou éventuellement un signal de détection lorsque le capteur temps de vol CTV détecte la présence d'un objet OBJ dans la cavité CAV.

Le système SYS ne saurait se limiter au mode de réalisation décrit précédemment en relation avec la figure 4 et peut très bien être réalisé avec des cavités d'aspects différents et un capteur temps de vol CTV positionné autrement tout en permettant à la zone de détection DET de couvrir suffisamment l'espace intérieur pour la détection de l'objet OBJ au fond FND de la cavité CAV.

Par ailleurs, le capteur temps de vol CTV comprend des moyens de calibration MCAL configurés pour déterminer l'intervalle de distance et l'intervalle de quantité de photons à partir de la détection de la paroi PAR de la cavité CAV opposée au capteur temps de vol CTV.

La calibration par les moyens de calibration MCAL du capteur CTV permet, après installation du capteur CTV dans la cavité CAV, l'enregistrement par le capteur CTV de la position de la paroi PAR afin de ne pas confondre un objet OBJ avec cette paroi PAR lors de la phase de détection et facilite ainsi son intégration dans un système de détection SYS comportant une cavité de dimension variable.

La figure 5 illustre un exemple de procédé de détection d'au moins un objet OBJ par le capteur temps de vol CTV tel que décrit précédemment en relation avec les figures 1 à 4. Le procédé est par exemple mis en oeuvre pour un système SYS de détection tel que décrit en relation avec la figure 4, c'est-à-dire après l'installation du capteur temps de vol CTV dans la cavité CAV.

Le procédé comprend une calibration 100 du capteur temps de vol CTV de façon à déterminer l'intervalle de distance et l'intervalle de quantité de photons à partir de la détection de la paroi PAR de la cavité CAV opposée au capteur temps de vol CTV.

Le procédé comprend une émission 101 d'un rayonnement optique RE par les moyens d'émission ME. Le rayonnement optique RE se propage dans la cavité CAV jusqu'à être réfléchi par un objet OBJ ou la paroi PAR de la cavité CAV.

Le procédé comprend également une réception 102 d'une quantité de photons SIGN provenant du rayonnement réfléchi RR par les moyens de réception MR.

Le procédé comprend une mesure 103 par les moyens de mesure MM de la quantité de photons SIGN et de la distance DIST entre le capteur temps de vol CTV et l'objet OBJ ou la paroi PAR.

Le procédé comprend une analyse 104 de la quantité de photons SIGN et de la distance DIST associée de façon à déterminer la présence d'au moins un objet OBJ dans la zone de détection DET.

L'analyse 104 comprend un stockage 105 de N valeurs de quantités de photons SIGN et de distances DIST mesurées et un calcul 106 d'un indicateur de tendance centrale de quantité de photons à partir des N quantités de photons SIGN et un indicateur de tendance centrale de distance à partir des N distances DIST.

En particulier, le stockage 105 est réalisé par les moyens de stockages MS qui peuvent stocker les données de mesure MES périodiquement.

Le calcul 106 des indicateurs de tendance centrale est effectué par les moyens de calcul MC à partir des N valeurs de quantités de photons et de distances stockées dans les moyens de stockage MS. En particulier, l'indicateur de tendance centrale de quantités de photons est une moyenne ou une médiane des N quantités de photons mesurées et l'indicateur de tendance centrale de distance est une moyenne ou une médiane des N distances associées aux quantités de photons.

L'analyse 104 permet de déterminer la présence ou non d'au moins un objet OBJ dans la zone de détection DET selon lesdits indicateurs de tendance centrale calculées. Un objet OBJ peut être détecté lorsque la valeur d'indicateur de tendance centrale de distance DMIL2 des N distances mesurées est inférieur à la première distance D1 ou lorsque la valeur d'indicateur de tendance centrale de distance DMIL2 est comprise dans l'intervalle de distance et lorsque la valeur d'indicateur de tendance centrale de quantité de photons SMIL2 des N quantités de photons est compris dans l'intervalle de quantité de photons, , c'est-à-dire est inférieur à la première valeur S1 ou est supérieur à la deuxième valeur S2..

Enfin, le procédé comprend une calibration du capteur temps de vol CTV de façon à déterminer l'intervalle de distance et l'intervalle de quantité de photons à partir de la détection de la paroi PAR de la cavité CAV opposée au capteur temps de vol CTV.

## Revendications

1. Procédé de détection d'au moins un objet (OBJ) dans une zone de détection (DET), comprenant :
- une émission d'un rayonnement optique par des moyens d'émission (ME) d'un capteur temps de vol (CTV),
- une réception par des moyens de réception (MR) du capteur temps de vol (CTV) d'une quantité de photons de rayonnement optique réfléchi par ledit au moins un objet (OBJ),
- une mesure par des moyens de mesure (MM) du capteur temps de vol (CTV) d'une quantité de photons (SIGN) et d'une distance (DIST) entre ledit capteur temps de vol (CTV) et ledit au moins un objet (OBJ), et
- une analyse de la quantité de photons détectés (SIGN) et de la distance (DIST) associée de façon à déterminer la présence d'au moins un objet (OBJ) dans la zone de détection (DET) du capteur temps de vol (CTV).

2. Procédé selon la revendication 1, dans lequel l'analyse de la quantité de photons (SIGN) associée à la distance mesurée (DIST) comprend un stockage successif de N valeurs de quantités de photons et de distances (DIST) associées, un calcul d'un indicateur de tendance centrale des quantités de photons (SMIL) à partir des N quantités de photons, et un calcul d'un indicateur de tendance centrale des distance (DMIL) de sorte que ledit au moins un objet (OBJ) est détecté selon lesdits indicateurs de tendance centrale calculés.

3. Procédé selon la revendication 2, dans lequel ledit au moins un objet (OBJ) est détecté lorsque l'indicateur de tendance centrale de distance (DMIL1, DMIL2) est compris dans un intervalle de distances (D1, D2) et lorsque l'indicateur de tendance centrale de quantités de photons (SMIL1, SMIL2) est compris dans un intervalle de quantités de photons.

4. Procédé selon la revendication 2, dans lequel ledit au moins un objet (OBJ) est détecté lorsque l'indicateur de tendance centrale de distance (DMIL1, DMIL2) est inférieur à une première distance (D1).

5. Procédé selon l'une des revendications 2 à 4, dans lequel l'indicateur de tendance centrale de quantités de photons est une médiane des N quantités de photons (SMIL1, SMIL2) et l'indicateur de tendance centrale de distance est une médiane des N distances (DMIL1, DMIL2) associées.

6. Procédé selon l'une des revendications 2 à 4, dans lequel l'indicateur de tendance centrale de quantités de photons est une moyenne des N quantités de photons (SMIL1, SMIL2) et l'indicateur de tendance centrale de distance est une moyenne des N distances (DMIL1, DMIL2) associées.

7. Procédé de détection d'au moins un objet (OBJ) dans une cavité (CAV) comportant une ouverture (OUV) par laquelle ledit au moins un objet (OBJ) peut s'engouffrer et un fond (FND), un capteur temps de vol (CTV) étant monté sur une paroi (EXT) de la cavité, le capteur temps de vol (CTV) présentant une zone de détection (DET) s'étendant entre le capteur temps de vol (CTV) et une paroi (PAR) de la cavité (CAV) opposée au capteur temps de vol jusqu'au fond (FND) de la cavité,
le procédé comprenant une mise en oeuvre d'un procédé selon l'une des revendications 1 à 6 par le capteur temps de vol de manière à détecter la présence dudit au moins un objet (OBJ) lorsqu'il repose sur le fond (FND) de la cavité.

8. Procédé de détection selon la revendication 7, comprenant une émission de faisceaux lumineux par un écran (ECR) situé au fond (FND) de la cavité (CAV) et une orientation des faisceaux lumineux vers l'extérieur de la cavité (CAV) par un miroir incliné (MIR) placé au niveau de l'ouverture (OUV).

9. Procédé de détection selon l'une quelconque des revendications 7 ou 8 prise en combinaison avec la revendication 3, comprenant une calibration du capteur temps de vol (CTV) de façon à déterminer l'intervalle de distance et l'intervalle de quantité de photons à partir de la détection de la paroi (PAR) de la cavité (CAV) opposée au capteur temps de vol (CTV).

10. Capteur temps de vol, comprenant :
- des moyens d'émission (ME) configurés pour émettre un rayonnement optique,
- des moyens de réception (MR) configurés pour détecter une quantité de photons de rayonnement optique réfléchi par ledit au moins un objet (OBJ),
- des moyens de mesure (MM) configurés pour mesurer une quantité de photons (SIGN) et une distance (DIST) entre ledit capteur temps de vol (CTV) et ledit au moins un objet (OBJ), et
- des moyens de traitement (MT) configurés pour analyser la quantité de photons (SIGN) et la distance (DIST) associée de façon à déterminer la présence d'au moins un objet (OBJ) dans une zone de détection (DET) du capteur temps de vol (CTV).

11. Capteur selon la revendication 10, dans lequel les moyens de traitement (MT) comprennent des moyens de stockage (MS) configurés pour stocker successivement N valeurs de quantités de photon (SIGN) et de distances (DIST) associées et des moyens de calcul (MC) configurés pour calculer un indicateur de tendance centrale de quantité de photons (SMIL) à partir des N quantités de photons et calculer un indicateur de tendance centrale de distance (DMIL) à partir des N distances de sorte que ledit au moins un objet (OBJ) est détecté selon lesdits indicateurs de tendance centrale calculés.

12. Capteur selon la revendication 11, dans lequel ledit au moins un objet (OBJ) est détecté lorsque l'indicateur de tendance centrale de distance (DMIL1, DMIL2) est compris dans un intervalle de distance (D1, D2) et lorsque l'indicateur de tendance centrale de quantités de photons (SMIL1, SMIL2) est compris dans un intervalle de quantités de photons.

13. Capteur selon la revendication 11, dans lequel ledit au moins un objet (OBJ) est détecté lorsque l'indicateur de tendance centrale de distance (DMIL1, DMIL2) est inférieur à une première distance (D1).

14. Capteur selon l'une des revendications 11 à 13, dans lequel l'indicateur de tendance centrale de quantités de photons est une médiane des N quantités de photons (SMIL1, SMIL2) et l'indicateur de tendance centrale de distance est une médiane des N distances (DMIL1, DMIL2) associées.

15. Capteur selon l'une des revendications 11 à 13, dans lequel l'indicateur de tendance centrale de quantités de photons est une moyenne des N quantités de photons (SMIL1, SMIL2) et l'indicateur de tendance centrale de distance est une moyenne des N distances (DMIL1, DMIL2) associées.

16. Système de détection (SYS) comprenant :
- une cavité (CAV) comportant une ouverture (OUV) par laquelle ledit au moins un objet (OBJ) peut s'engouffrer dans la cavité (CAV) et un fond (FND),
- un capteur temps de vol (CTV) selon l'une des revendications 10 à 15, monté sur une paroi (EXT) de la cavité (CAV), la zone de détection (DET) du capteur temps de vol s'étendant entre le capteur temps de vol (CTV) et une paroi (PAR) de la cavité opposée au capteur temps de vol (CTV) jusqu'au fond (FND) de la cavité de manière à pouvoir détecter la présence dudit au moins un objet (OBJ) lorsqu'il repose sur le fond (FND) de la cavité.

17. Système de détection selon la revendication 16, dans lequel la cavité (CAV) comprend et un écran (ECR) situé au fond (FND) de la cavité (CAV) et un miroir incliné (MIR) placé au niveau de l'ouverture (OUV) et configuré pour orienter des faisceaux lumineux émis par l'écran (ECR) vers l'extérieur de la cavité (CAV).

18. Système de détection selon l'une quelconque des revendications 16 ou 17 prise en combinaison avec la revendication 12, dans lequel le capteur temps de vol comprend des moyens de calibration (MCAL) configurés pour déterminer l'intervalle de distance et l'intervalle de quantité de photons à partir de la détection de la paroi (PAR) de la cavité (CAV) opposée au capteur temps de vol (CTV).
